Europäisches Patentamt

**European Patent Office**

**Office européen des brevets**

(19)

(11) Publication number:

**0 385 780**

**A2**

(12)

# EUROPEAN PATENT APPLICATION

(21) Application number: **90302199.6**

(51) Int. Cl.5: **G02B 27/10**

(22) Date of filing: **01.03.90**

(30) Priority: **02.03.89 GB 8904729**

(43) Date of publication of application:
**05.09.90 Bulletin 90/36**

(84) Designated Contracting States:
**AT CH DE FR GB LI SE**

(71) Applicant: **LORAL EUROPE LIMITED**
**580 Great Cambridge Road**
**Enfield, Middlesex EN1 3RX(GB)**

(72) Inventor: **Lawrence, Ian, Loral Europe Limited**
**580 Great Cambridge Road**
**Enfield, Middlesex EN1 3RX(GB)**

(74) Representative: **Smith, Philip Antony et al**
**REDDIE & GROSE 16 Theobalds Road**
**London WC1X 8PL(GB)**

(54) **Image overlaying system.**

(57) Images formed by lens systems 5 and 9 from object plates 7 and 11 are combined by a pair of prisms 2 and 3 to provide a combined image at the exit pupil 14. The small compound lens 5 with a wide field of view produces a divergent beam 8 which passes through the prisms to a retroreflector 4 from which a convergent beam impinges on the internally-reflecting surface of the prism 3 and is combined with the convergent beam from the lens 9.

Fig.2.

## IMAGE OVERLAYING SYSTEM

The present invention relates to optical image overlaying systems which combine images arising from two separate objects.

Existing systems for overlaying images, are arranged to view a first overlay scene and a second through scene, and to combine the two views optically. Such systems may be used, for example, in magnifying sights or in a telescope.

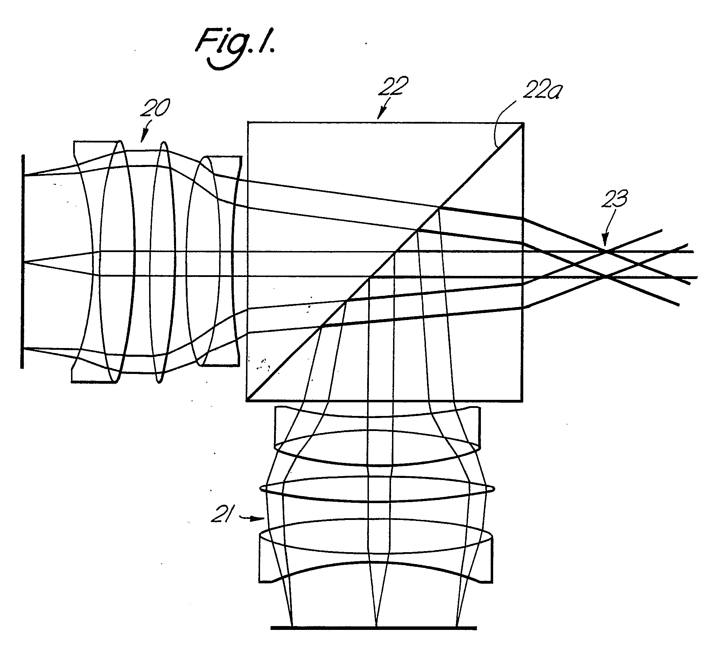

Figure 1 of the accompanying drawings shows a known system for overlaying images, in which light from matching lens systems 20 and 21 is combined by an optical combiner 22 so that a combined image is viewed at the exit pupil 23. The example shown uses two lens systems, each comprising two compound lenses and one single lens. It is a disadvantage of such a known image overlaying system that lens systems such as 20 and 21 (Fig.1), are relatively large and complex, which is a problem in the limited confines of a sight or telescope. These complex lens systems are also very expensive.

These problems arise because the lens system 20, e.g. the objective of a telescope or sight, must have a certain numerical aperture and this same aperture is then required for the lens system 21 providing the image to be superimposed on the scene viewed through the telescope or sight. This is inevitable because the combination of the images at the partially reflective interface 22a of the combiner 22 requires similarly convergent beams from the two lens systems, to enable the virtual image to be viewed at the exit pupil 23.

The object of the present invention is to overcome the problems of existing image overlaying systems, and so provide an improved system.

According to the present invention there is provided an image overlaying system comprising first and second lens systems for receiving light from first and second object planes respectively, an optical combiner arranged to receive light from the first and second lens systems and a retroreflector arranged to reflect the light from the first lens system to the optical combiner so that the resulting retroreflected light is combined with the light from the second lens system to provide a combined image.

With a system according to the present invention, it is possible to reduce the size and complexity of the lens system required to view the overlay scene while still allowing a wide field in the overlay scene to be viewed.

The invention will further be described with reference to the accompanying drawings, in which

Figure 1 shows an existing image overlaying system, already described; and

Figure 2 shows an image overlaying system according to one embodiment of the invention.

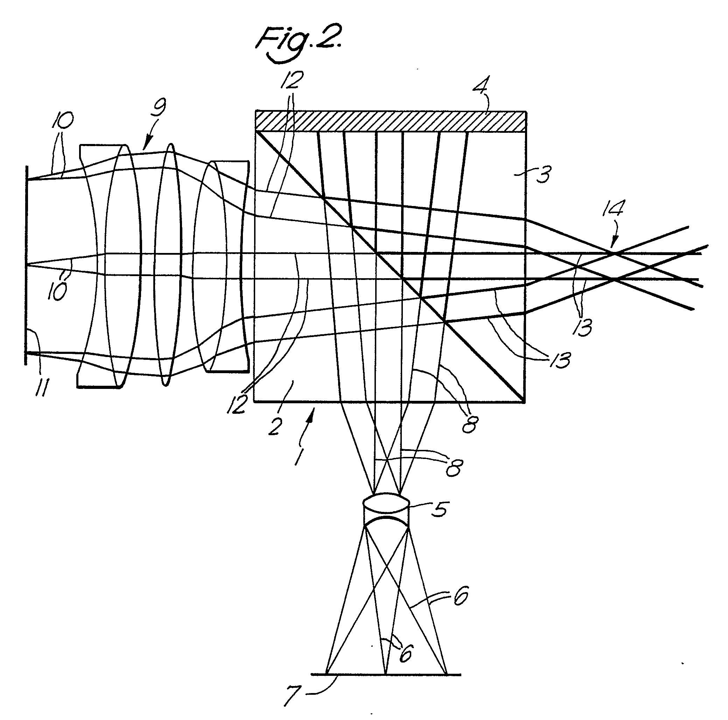

In Figure 2 is shown an optical combiner or splitter 1 of well known form comprising two prisms 2 and 3 bonded together. On one of the outer surfaces of the prism 3 there is a layer of retroreflective material 4. One commercially available retroreflective material is "Silver Transfer Film" sold by Minnesota Mining and Manufacturing Corporation, part number 8850.

5 is a small, high f-number compound lens which receives light, shown by ray paths 6 for the on axis and marginal ray bundles, from an object or a real image in an object plane 7, and collimates the light. That is to say, the rays from any given point on the object are converted into parallel rays. The collimated light is shown by ray paths 8.

A lens system 9 is arranged to receive light, shown by ray paths 10 for the on axis and marginal ray bundles, from an object or a real image in an object plane 11, and to collimate the light. That is, the rays from any given point on the object are converted into parallel rays. The collimated light is shown by ray paths 12.

When the system is in use, a proportion of the collimated light 8 from the lens 5 is refracted at one external boundary of the prism 2 of the beam combiner 1, and passes through the prisms 2 and 3 of the beam combiner to the layer of retroreflective material 4, and is retroreflected. The retroreflected light is then reflected at the boundary between the prisms 2 and 3.

A proportion of the collimated light 12 from the lens system 9 is refracted at one external boundary of the prism 2 and passes through the prisms 2 and 3. At the boundary between the prisms 2 and 3, collimated light 12 originating from the lens system 9 combines with light which has originated from the lens 5, been subsequently retroreflected and then reflected at the boundary. The combined light is shown by ray paths 13.

The combined light 13 is refracted at the external boundary of the prism 3 so that a virtual image of both objects 7 and 11, is viewed at the exit pupil 14.

The invention enables the use of one small compound lens 5 with a wide field of view to view the overlay scene. The object plane 7 is so positioned that the lens produces a diverging beam of light.

For the optical combiner to combine beams of light, the angle of incidence of light from the overlay lens system at the boundary between the prisms must be such that light is reflected along the same ray paths as light passing through the boundary from the other lens system. For this reason, existing systems have employed matching lens systems (e.g. 20 and 21, Fig.1), each of which results in a converging beam of light.

It would not normally be possible, therefore, to use a lens with a wide field of view which produces a diverging beam of light in a system such as this, since the diverging beams would not have the correct angle of incidence at the boundary between the prisms.

The invention makes the use of an overlay lens system with a wide field of view possible, by employing a retroflective material, so that the diverging beam from the overlay lens is retroreflected. It is then incident at the boundary between the prisms, as a converging beam, at the correct angle to be reflected so as to combine with light from the other lens system.

Other known forms of optical combiner may be used with the present invention, for example, a half-silvered mirror.


## Claims

1. An image overlaying system comprising first and second lens systems for receiving light from first and second object planes respectively, an optical combiner arranged to receive light from the first and second lens systems and a retroreflector arranged to reflect the light from the first lens system to the optical combiner so that the resulting retroreflected light is combined with the light from the second lens system to provide a combined image.

2. An image overlaying system according to claim 1, wherein the first lens system has a substantially smaller numerical aperture than the second lens system.

3. An image overlaying system according to claim 1 or 2, wherein the second lens system directs a convergent beam of light to the combiner and the first lens system directs a divergent beam of light to the retroreflector which reflects a convergent beam of light to the combiner.

4. An image overlaying system according to claim 3, wherein the divergent beam of light passes through the combiner to the retroreflector.

5. An image overlaying system according to any of claims 1 to 4, wherein the combiner comprises two prisms bonded together and the retroreflector comprises a retroreflective layer on a face of one of the prisms.

*Fig.1.*

Fig.2.